# EUROPÄISCHE PATENTANMELDUNG

(11) **EP 3 629 446 A1**
(43) Veröffentlichungstag der Anmeldung: **01.04.2020**
(21) Anmeldenummer: 18196840.5
(22) Anmeldetag: 26.09.2018
(51) Int. Cl.: H02K 1/20, H02K 1/27, H02K 1/32, H02K 1/30, H02K 9/10

(54) **ROTOR FÜR EINE ELEKTRISCHE ROTIERENDE MASCHINE MIT VERBESSERTER KÜHLUNG UND MAGNETFLUSS**

(71) Anmelder: Siemens Aktiengesellschaft, 80333 München (DE)
(72) Erfinder: Balzer, Christoph, 12163 Berlin (DE); Schulz, Sabrina, 16515 Oranienburg OT Sachsenhausen (DE); Seibicke, Frank, 14822 Borkheide (DE); Strüver, Sebastian, 10585 Berlin (DE); Vogeley, Peter, 14612 Falkensee (DE); Wende, Konrad, 13347 Berlin (DE)

(57) **Zusammenfassung**

Die Erfindung betrifft einen Rotor (6) für eine elektrische rotierende Maschine (2) mit mindestens einem Magneten, welcher ein magnetisches Feld (34) erzeugt, und einem magnetfeldführenden Rotorelement, wobei das magnetfeldführende Rotorelement mindestens einen Kühlkanal (18) aufweist. Um ein Magnetfeld verlustarm zu erzeugen und eine effiziente Kühlung zu gewährleisten, wird vorgeschlagen, dass der mindestens eine Kühlkanal (18) in einem Querschnitt eine Kontur (32) aufweist, welche zumindest abschnittsweise einem Verlauf des magnetischen Feldes (34) folgend ausgeführt ist.

## Beschreibung

Die Erfindung betrifft einen Rotor für eine elektrische rotierende Maschine mit mindestens einem Magneten, welcher ein magnetisches Feld erzeugt, und einem magnetfeldführenden Rotorelement, wobei das magnetfeldführende Rotorelement mindestens einen Kühlkanal aufweist.

Die Erfindung betrifft ferner eine elektrische rotierende Maschine mit mindestens einem derartigen Rotor.

Darüber hinaus betrifft die Erfindung einen Gondelantrieb mit zumindest einer derartigen elektrischen rotierenden Maschine.

Die Erfindung betrifft überdies ein Wasserfahrzeug mit zumindest einem derartigen Gondelantrieb.

Derartige Rotoren kommen insbesondere in elektrischen rotierenden Maschinen vor, welche im Schiffsbau eingesetzt werden und mit einer Leistung von mindestens einem Megawatt betreibbar sind. Die elektrische rotierende Maschine, welche beispielsweise als Motor und/oder als Generator betreibbar ist, ist insbesondere als Synchronmaschine ausgeführt und weist einen Stator und einen Rotor mit Magneten auf, wobei zwischen dem Stator und dem Rotor ein Spalt angeordnet ist.

Um eine verlustarme Erzeugung eines Magnetfeldes im Spalt zu gewährleisten und um die Magnete während des Betriebes der elektrischen rotierenden Maschine zu sichern, bedarf es mechanisch aufwändiger Lösungen zur Fixierung der Magnete. Als Alternative, insbesondere für hohe Umfangsgeschwindigkeiten, ist eine Anordnung von Magneten in Aussparungen eines magnetfeldführenden Rotorelements, beispielsweise einem Blechpaket, bekannt.

Die Offenlegungsschrift DE 10 2007 022 835 A1 beschreibt einen Rotor für permanentmagnetisch erregte elektrische Maschinen mit vergrabenen Magneten, bei dem eine Vielzahl von kongruenten Blechschnitten zur Wirbelstromunterdrückung in axialer Richtung zu einem Blechpaket aufgeschichtet und Magnete in Aussparungen der Blechschnitte eingeschlossen angeordnet sind.

Die Offenlegungsschrift DE 10 2011 052 085 A1 beschreibt eine permanent erregte Synchronmaschine, aufweisend einen Stator, wobei im Stator Wicklungen vorgesehen sind, einen Rotor, wobei der Rotor eine Welle und zumindest ein fest an der Welle angeordnetes Blechpaket, in dem Permanentmagnete angeordnet sind, aufweist, wobei in der Welle zumindest eine erste Leitung zum Ein- und Durchleiten eines Kühlmediums und zumindest eine zweite Leitung zum Durch- und Ausleiten des Kühlmediums vorgesehen sind.

Der Erfindung liegt die Aufgabe zugrunde, einen Rotor für eine elektrische rotierende Maschine anzugeben, der verlustarm ein Magnetfeld erzeugt und eine effiziente Kühlung aufweist.

Die Aufgabe wird erfindungsgemäß durch einen Rotor der eingangs genannten Art gelöst, wobei der mindestens eine Kühlkanal in einem Querschnitt eine Kontur aufweist, welche zumindest abschnittsweise einem Verlauf des magnetischen Feldes folgend ausgeführt ist.

Weiterhin wird die Aufgabe erfindungsgemäß durch eine elektrische rotierende Maschine mit mindestens einem derartigen Rotor gelöst.

Ferner wird die Aufgabe erfindungsgemäß durch einen Gondelantrieb mit zumindest einer derartigen elektrischen rotierenden Maschine gelöst.

Darüber hinaus wird die Aufgabe erfindungsgemäß durch ein Wasserfahrzeug mit zumindest einem derartigen Gondelantrieb gelöst.

Die in Bezug auf den Rotor nachstehend angeführten Vorteile und bevorzugten Ausgestaltungen lassen sich sinngemäß auf die elektrische rotierende Maschine, den Gondelantrieb und das Wasserfahrzeug übertragen.

Der Erfindung liegt die Überlegung zugrunde, den Rotor im Bereich eines Magneten möglichst effizient zu kühlen, ohne den Verlauf eines vom Magneten erzeugten magnetischen Feldes durch die Lager mindestens eines Kühlkanals in einem magnetfeldführenden Rotorelement zu beeinflussen. Der mindestens eine Magnet ist beispielsweise als Elektromagnet ausgeführt, welcher eine stromdurchflossene Spule umfasst. Das magnetfeldführende Rotorelement ist beispielsweise aus einem magnetischen Werkstoff, insbesondere Stahl, gefertigt. Damit der Kühlkanal, ohne das magnetische Feld erkennbar zu beeinflussen, möglichst nahe am Magneten verlaufend anordenbar ist, wird eine Kontur des Kühlkanals zumindest abschnittsweise dem Verlauf des magnetischen Feldes angepasst. Es wird sowohl ein optimierter Magnetfluss als auch eine optimierte Kühlung gewährleistet.

In einer bevorzugten Ausführungsform ist der mindestens eine Magnet als ein Permanentmagnet ausgeführt. Durch die Verwendung von Permanentmagneten ist ein hoher Wirkungsgrad erzielbar. Eine Optimierung von Kühlung und Magnetfluss erlaubt einen Einsatz kostengünstiger Permanentmagnete.

Bei einer weiteren vorteilhaften Ausgestaltung wird der mindestens eine Permanentmagnet als vergrabener Permanentmagnet ausgeführt. Ein vergrabener Permanentmagnet ist beispielsweise in einer Aussparung des magnetfeldführenden Rotorelements eingeschlossen angeordnet. Ein vergrabener Permanentmagnet ist, insbesondere im Vergleich zu einem Oberflächenmagneten, gegen während des Betriebes auftretende Fliehkräfte und andere Einflüsse besser geschützt. Zudem treten geringere elektrische Verluste bei einem vergrabenen Permanentmagneten auf.

Besonders vorteilhaft ist ein zumindest einem Magneten zugewandter Abschnitt der Kontur des Kühlkanals dem Verlauf des magnetischen Feldes folgend ausgeführt. Durch eine Anpassung des dem Magneten zugewandten Abschnitts der Kontur wird ein optimierter Magnetfluss gewährleistet, was zu einer verlustarmen Erzeugung des Magnetfeldes führt.

In einer vorteilhaften Ausführungsform weist der mindestens eine Kühlkanal eine dreieckige Kontur auf. Eine dreieckige Kontur ist besonders gut an den Magnetfluss des mindestens einen Magneten anpassbar, sodass der Kühlkanal nahe am Magneten, ohne das magnetische Feld erkennbar zu beeinflussen, anordenbar ist, was zu einer effizienten Kühlung führt.

Besonders vorteilhaft ist zumindest eine der Seiten der dreieckigen Kontur dem Verlauf des magnetischen Feldes folgend ausgeführt. Durch eine Anpassung zumindest einer Seite der dreieckigen Kontur wird ein optimierter Magnetfluss gewährleistet, was zu einer verlustarmen Erzeugung des Magnetfeldes führt.

Bei einer weiteren vorteilhaften Ausgestaltung weist der Kühlkanal zumindest abschnittsweise eine Rippenstruktur auf. Die Rippenstruktur ist beispielsweise treppenförmig ausgeführt und führt zu einer Vergrößerung der Oberfläche, was den Temperaturaustausch und damit die Kühlung verbessert.

In einer weiteren vorteilhaften Ausführungsform ist der mindestens eine Kühlkanal in einem mechanisch zumindest gering belasteten Bereich des magnetfeldführenden Rotorelements angeordnet. Mechanische Belastungen sind beispielsweise thermische Verspannungen. Beispielsweise ist der Kühlkanal im Wesentlichen mittig zwischen zwei mechanischen Verbindungen angeordnet. Durch eine derartige Anordnung wird die mechanische Stabilität des Rotors verbessert.

In einer bevorzugten Ausführungsform ist das magnetfeldführende Rotorelement als Blechpaket ausgeführt, wobei das Blechpaket eine Vielzahl von in Axialrichtung aufgeschichteten Elektroblechen umfasst. Beispielsweise werden die Elektrobleche aus einem weichmagnetischen Material hergestellt. Durch das Blechpaket wird eine Ausbreitung von Wirbelströmen im Rotor zumindest verringert.

In einer weiteren vorteilhaften Ausgestaltung umfasst das Blechpaket mindestens zwei Teilblechpakete mit jeweils mindestens einem Magneten und mindestens einem Kühlkanal, wobei die mindestens zwei Teilblechpakete des Blechpakets in Umfangsrichtung auf einer Welle angeordnet sind. Beispielsweise sind die Teilblechpakete segmentförmig ausgeführt. Eine derartige Anordnung ermöglicht einen modularen Aufbau und eine kostengünstige Fertigung des Rotors.

Besonders vorteilhaft sind die Teilblechpakete im Wesentlichen achsensymmetrisch zu einer in Radialrichtung verlaufenden Symmetrieachse ausgeführt. Eine achsensymmetrische Anordnung ermöglicht eine kostengünstige Fertigung des Rotors.

Bei einer weiteren vorteilhaften Ausgestaltung ist zwischen der Welle und mindestens einem Teilblechpaket eine formschlüssige Verbindung ausgebildet. Beispielsweise ist das Teilblechpaket mit der Welle über eine Schwalbenschwanznut oder eine Hammerkopfnut verbunden. Durch eine derartige formschlüssige Verbindung ist das Teilblechpaket gegenüber während des Betriebes auftretenden Fliehkräften gesichert.

Besonders vorteilhaft ist zwischen der Welle und mindestens einem Teilblechpaket jeweils mindestens ein elastisches Verbindungselement zur spielfreien Lagerung des Teilblechpakets angeordnet. Das mindestens eine elastische Verbindungselement ist beispielsweise als, insbesondere zusammengepresstes, Federelement ausgeführt, welches das Teilblechpaket durch die Federkraft spielfrei lagert. Die Effizienz und die Laufruhe des Rotors werden durch das elastische Verbindungselement optimiert.

Im Folgenden wird die Erfindung anhand der in den Figuren dargestellten Ausführungsbeispiele näher beschrieben und erläutert.

Es zeigen:
- FIG 1: einen Längsschnitt einer elektrischen rotierenden Maschine,
- FIG 2: eine dreidimensionale Schnittdarstellung eines Rotors mit vergrabenen Permanentmagneten,
- FIG 3: einen vergrößerten Querschnitt eines Rotors mit einer ersten Ausführungsform des Blechpakets,
- FIG 4: einen vergrößerten Querschnitt eines Rotors mit einer zweiten Ausführungsform des Blechpakets,
- FIG 5: einen vergrößerten Querschnitt eines Rotors mit einer dritten Ausführungsform des Blechpakets,
- FIG 6: einen vergrößerten Querschnitt eines Rotors mit einer vierten Ausführungsform des Blechpakets,
- FIG 7: einen Querschnitt eines Rotors mit Oberflächenmagneten,
- FIG 8: einen vergrößerten Querschnitt eines Rotors mit Elektromagneten und
- FIG 9: ein Wasserfahrzeug mit einem Gondelantrieb.

Bei den im Folgenden erläuterten Ausführungsbeispielen handelt es sich um bevorzugte Ausführungsformen der Erfindung.

Bei den Ausführungsbeispielen stellen die beschriebenen Komponenten der Ausführungsformen jeweils einzelne, unabhängig voneinander zu betrachtende Merkmale der Erfindung dar, welche die Erfindung jeweils auch unabhängig voneinander weiterbilden und damit auch einzeln oder in einer anderen als der gezeigten Kombination als Bestandteil der Erfindung anzusehen sind. Des Weiteren sind die beschriebenen Ausführungsformen auch durch weitere der bereits beschriebenen Merkmale der Erfindung ergänzbar.

Gleiche Bezugszeichen haben in den verschiedenen Figuren die gleiche Bedeutung.

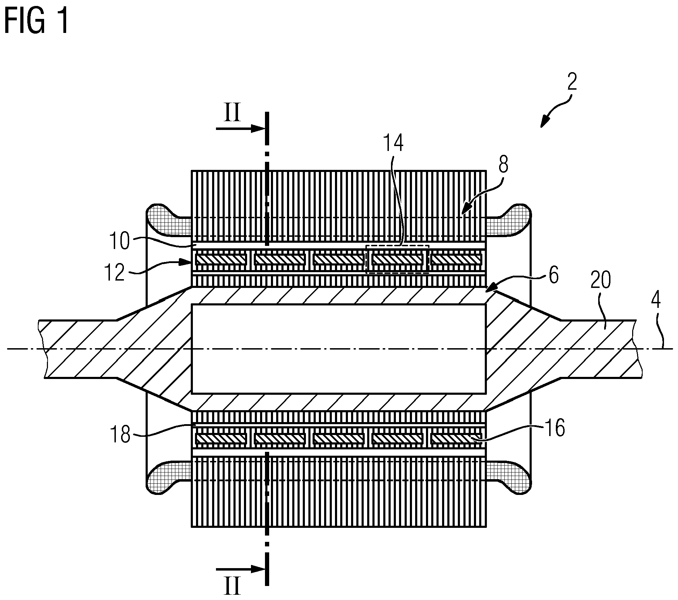

FIG 1 zeigt einen Längsschnitt einer elektrischen rotierenden Maschine 2. Die elektrische rotierende Maschine 2 ist mit einer Leistung von zumindest 1 Megawatt betreibbar, ist als permanenterregte Synchronmaschine ausgeführt und umfasst einen um eine Rotationsachse 4 rotierbaren Rotor 6, welcher einen Durchmesser von zumindest einem Meter aufweist. Die Rotationsachse 4 definiert eine Axialrichtung, eine Radialrichtung und eine Umfangsrichtung. Darüber hinaus weist die elektrische rotierende Maschine 2 einen Stator 8 auf. Zwischen dem Rotor 6 und dem Stator 8 ist ein Spalt 10, der insbesondere als Luftspalt ausgeführt ist, ausgebildet.

Der Rotor 6 umfasst ein magnetfeldführendes Rotorelement, welches als Blechpaket 12 ausgeführt ist. Das Blechpaket 12 ist in mehrere Teilblechpakete 14 aufgeteilt. Die Teilblechpakete 14 umfassen jeweils eine Vielzahl von Elektroblechen zur Unterdrückung von Wirbelströmen, welche in Axialrichtung aufgeschichtet sind. Ein Teilblechpaket 14 weist zumindest eine Aussparung auf, in die zumindest ein Permanentmagnet 16 eingeschlossen ist. Man spricht von daher von vergrabenen Permanentmagneten 16. Alternativ werden die Permanentmagnete 16 aufgeklebt und über Bandagen befestigt. Die Permanentmagnete 16 sind beispielsweise aus Samarium-Kobalt, Aluminium-Nickel-Kobalt, Neodym-Eisen-Bor, Samarium-Eisen-Nickel oder aus einer Mischung mindestens zwei der Werkstoffe hergestellt.

Darüber hinaus ist in den Teilblechpaketen 14 jeweils mindestens ein Kühlkanal 18 ausgebildet, wobei die Kühlkanäle 18 der axial hintereinander angeordneten Teilblechpakete 14 fluidtechnisch verbunden sind, sodass das Blechpaket 12 in Axialrichtung von einem Kühlfluid durchströmbar ist. Die Teilblechpakete 14 des Blechpakets 12 sind mit einer Welle 20 verbunden, welche beispielhaft als Hohlwelle ausgeführt ist. Alternativ sind die Teilblechpakete 14 zu einem, beispielsweise im Wesentlichen hohlzylinderförmigen, Blechpaket 12 zusammengefasst, welches um die Welle 20 angeordnet ist. Weitere Alternativen sind, dass das magnetfeldführende Rotorelement massive Pole aufweist und/oder dass statt der Permanentmagnete 16 Elektromagnete, welche beispielsweise als stromdurchflossene Spulen ausgeführt sind, verwendet werden.

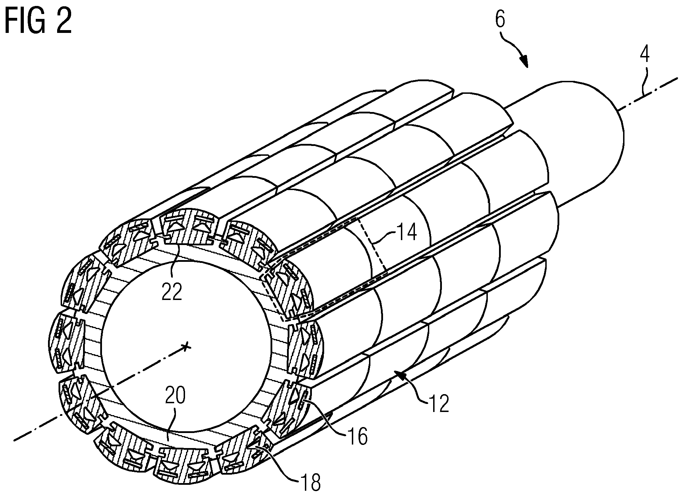

FIG 2 zeigt eine dreidimensionale Schnittdarstellung eines Rotors 6 mit vergrabenen Permanentmagneten 16. Der Rotor 6 umfasst ein Blechpaket 12 mit einer Mehrzahl von Teilblechpaketen 14, welche in Axialrichtung und in Umfangsrichtung verteilt auf der Welle 20 angeordnet sind. Insbesondere sind die Teilblechpakete 14 rotationssymmetrisch in Umfangsrichtung verteilt und formschlüssig mit der Welle 20 verbunden.

Die Teilblechpakete 14 umfassen beispielhaft jeweils zwei symmetrisch angeordnete Permanentmagnete 16. Optional werden mehrere Permanentmagnete 16 jeweils axial hintereinander in einem Teilblechpaket 14 angeordnet. Die Teilblechpakete 14 werden nacheinander über radial am Umfang verteilte Führungsnuten 22 auf die Welle 20 geschoben, wodurch zwischen den Teilblechpaketen 14 und der korrespondierenden Führungsnut 22 eine in Radialrichtung wirkende formschlüssigen Verbindung ausgebildet wird. Die weitere Ausführung des Rotors 6 in FIG 2 entspricht der in FIG 1.

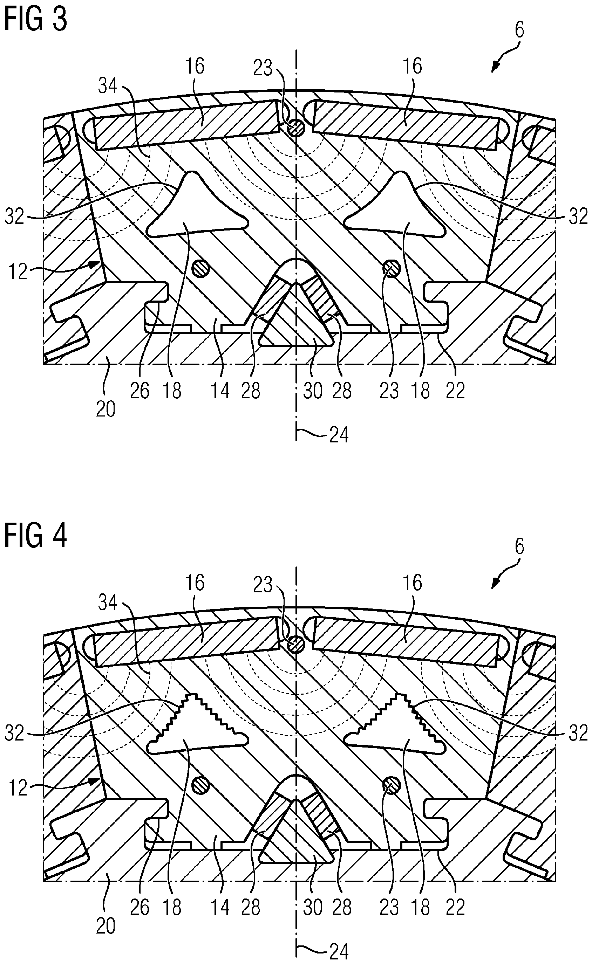

FIG 3 zeigt einen vergrößerten Querschnitt eines Rotors 6 mit einer ersten Ausführungsform des Blechpakets 12, welches in Umfangsrichtung verteilte Teilblechpakete 14 umfasst, welche in Führungsnuten 22 der Welle 20 angeordnet sind. Die zusammengepressten Elektrobleche der Teilblechpakete 14 werden von durch die jeweiligen Teilblechpakete 14 verlaufenden Bolzen 23 zusammengehalten. Die Teilblechpakete 14 sowie die Führungsnuten 22 sind im Wesentlichen achsensymmetrisch zu einer in Radialrichtung verlaufenden Symmetrieachse 24 ausgeführt. Die Führungsnut 22 bildet durch eine beidseitig zum jeweiligen Teilblechpaket 14 angeordnete Profilierung 26 eine formschlüssige Verbindung mit dem jeweiligen Teilblechpaket 14 aus. Beispielhaft ist die Führungsnut 14 als Hammerkopfnut ausgebildet. Eine alternative Ausgestaltung ist beispielsweise eine Schwalbenschwanznut.

Zusätzlich sind zwischen der jeweiligen Führungsnut 22 und dem zugehörigen Teilblechpaket 14 zumindest zwei elastische Verbindungselemente 28 zur spielfreien Lagerung des Teilblechpakets 14 in der Führungsnut 22 achsensymmetrisch zur Symmetrieachse 24 angeordnet. Die elastischen Verbindungselemente 28 sind beispielsweise als, insbesondere zusammengepresste, Federelemente ausgeführt. Um eine spielfreie Lagerung des Teilblechpakets 14 in Radialrichtung und in Umfangsrichtung zu erreichen, weist die Führungsnut 22 ein keilförmiges Zentrierungselement 30 auf, wobei das Teilblechpaket 14 eine zum Zentrierungselement 30 korrespondierende Aussparung 32 aufweist, welche achsensymmetrisch zur Symmetrieachse 24 angeordnet ist. Die elastischen Verbindungselemente 28 sind zwischen dem keilförmigen Zentrierungselement 30 der Führungsnut 22 und der achsensymmetrisch angeordneten Aussparung 32 des Teilblechpakets 14 derartig angeordnet, dass eine Kraft mit einer Kraftkomponente in Radialrichtung und einer Kraftkomponente in Umfangsrichtung auf das Teilblechpaket 14 ausgeübt wird. Um eine präzise Zentrierung zu erreichen, werden die gleichen elastischen Verbindungselemente 28 verwendet.

In den Teilblechpaketen 14 sind jeweils zwei gleiche Permanentmagnete 16 achsensymmetrisch angeordnet. Die Permanentmagnete 16 sind, auch teilblechpaketübergreifend, mit in Umfangsrichtung abwechselnder Polarität angeordnet. Den Permanentmagneten 16 ist jeweils ein Kühlkanal 18 zugeordnet. Die Kühlkanäle 18 weisen in einem Querschnitt eine Kontur 32 auf, die in einem Abschnitt, welcher einem Permanentmagneten 16 zugewandt ist, einem Verlauf eines magnetischen Feldes 34 der Permanentmagnete 16 folgend ausgeführt ist. Beispielhaft weist der Kühlkanal 18 eine dreieckige Kontur 32 auf, wobei zwei der Seiten der dreieckigen Kontur 32, welche den Permanentmagneten 16 zugewandt sind, dem Verlauf des magnetischen Feldes 34 folgend ausgeführt sind.

Darüber hinaus sind die Kühlkanäle 18 in einem mechanisch gering belasteten Bereich des Teilblechpakets 14 angeordnet. Mechanische Belastungen sind beispielsweise Verspannungen, welche von den durch das Teilblechpaket 14 verlaufenden Bolzen 23 und/oder von der Verbindung des Teilblechpakets 14 mit der Welle 20 in der Führungsnut 26 verursacht werden. Beispielsweise sind die Kühlkanäle 18 im Wesentlichen mittig zwischen den Bolzen 23 angeordnet, welche dem jeweiligen Kühlkanal 18 am nächsten gelegen sind. Die weitere Ausführung des Rotors 6 in FIG 3 entspricht der in FIG 2.

FIG 4 zeigt einen vergrößerten Querschnitt eines Rotors 6 mit einer zweiten Ausführungsform des Blechpakets 12. Die Kühlkanäle 18 weisen jeweils an zwei Seiten der dreieckigen Kontur 32, welche den Permanentmagneten 16 zugewandt sind, eine Rippenstruktur auf. Durch die Rippenstruktur, welche im Querschnitt beispielhaft treppenförmig ausgeführt ist, wird die Oberfläche der Kühlkanäle 18 vergrößert, um den Wärmeaustausch zwischen einem durch die Kühlkanäle 18 verlaufenden Kühlfluid und dem jeweiligen Teilblechpaket 14 zu optimieren. Die weitere Ausführung des Rotors 6 in FIG 4 entspricht der in FIG 3.

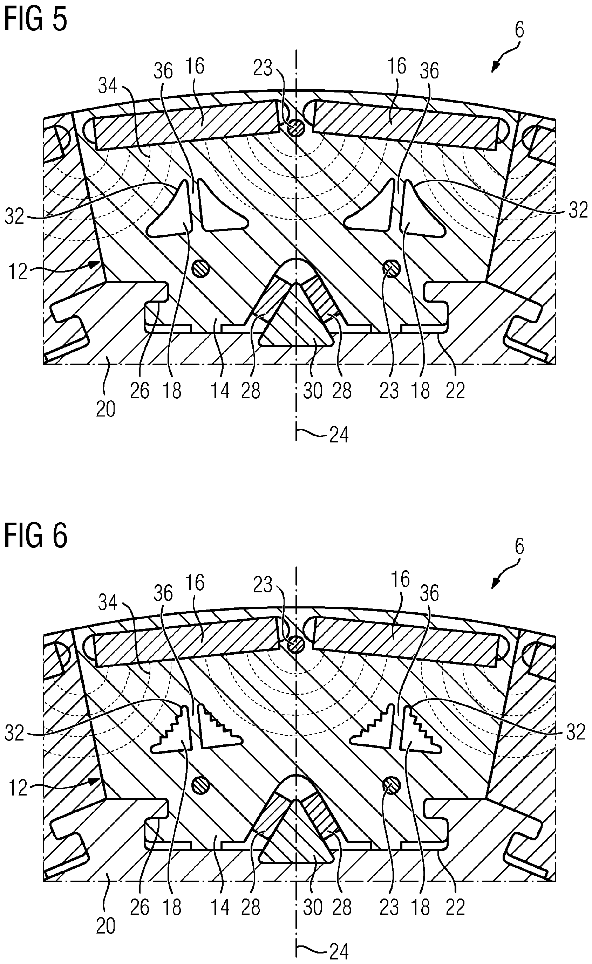

FIG 5 zeigt einen vergrößerten Querschnitt eines Rotors mit einer dritten Ausführungsform des Blechpakets, wobei jeweils zwei achsensymmetrisch angeordnete und durch einen Steg 36 voneinander getrennte Kühlkanäle 18 mit einer dreieckigen Kontur 32 unter einem Permanentmagneten derartig angeordnet sind, dass eine Seite der dreieckigen Kontur 32, welche dem jeweilig nächsten Permanentmagneten 16 zugewandt ist, dem Verlauf des magnetischen Feldes 34 folgend ausgeführt ist. Durch den Steg 36 wird die mechanische Stabilität der Teilblechpakete 14, insbesondere in Radialrichtung, verbessert. Die weitere Ausführung des Rotors 6 in FIG 5 entspricht der in FIG 3.

FIG 6 zeigt einen vergrößerten Querschnitt eines Rotors mit einer vierten Ausführungsform des Blechpakets. Die Kühlkanäle 18 weisen jeweils an einer Seite der dreieckigen Kontur 32, welche den Permanentmagneten 16 zugewandt ist, eine Rippenstruktur auf. Durch die Rippenstruktur, welche im Querschnitt beispielhaft treppenförmig ausgeführt ist, wird die Oberfläche der Kühlkanäle 18 vergrößert, um den Wärmeaustausch zwischen einem durch die Kühlkanäle 18 verlaufenden Kühlfluid und dem jeweiligen Teilblechpaket 14 zu optimieren. Die weitere Ausführung des Rotors 6 in FIG 6 entspricht der in FIG 5.

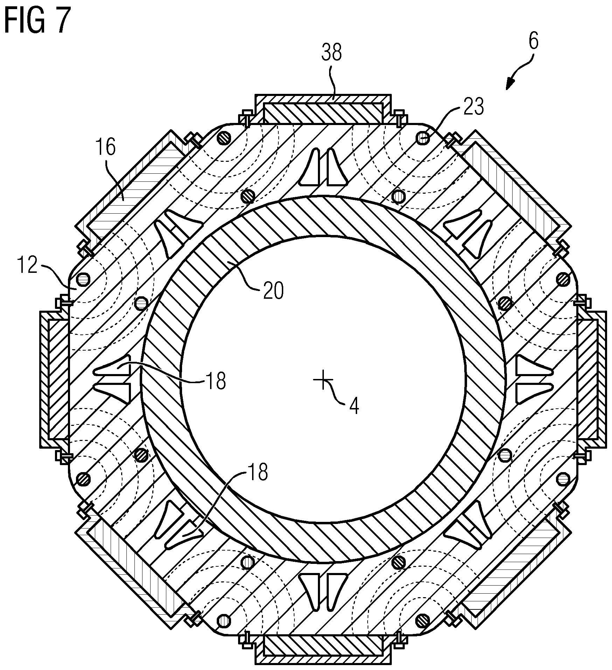

FIG 7 zeigt einen Querschnitt eines Rotors 6 mit Oberflächenmagneten. Der Rotor 6 weist ein hohlzylinderförmiges Blechpaket 12 auf, welches mit einer Welle 20 drehfest verbunden ist. Die drehfeste Verbindung des Blechpakets 12 mit der Welle 20 wird beispielsweise durch Schweißen hergestellt. Alternativ wird das Blechpaket 12 auf die Welle 20 aufgeschrumpft.

Die Permanentmagnete 16, die als Oberflächenmagnete ausgeführt sind, werden auf die Oberfläche aufgeklebt und anschließend mit Hilfe einer metallischen Abdeckung 38 fixiert und dadurch insbesondere gegen Fliehkräfte gesichert. Alternativ werden die Oberflächenmagnete mit Bandagen fixiert, wobei die Bandagen aus einem Gewebematerial hergestellt sind, das beispielsweise von einem Harz getränkt ist. Eine Ausführung und Anordnung der Kühlkanäle 18 im Bezug auf die magnetischen Felder 34 im Blechpaket 12 entspricht der in FIG 5. Optional weisen die Kühlkanäle 18 eine Rippenstruktur auf.

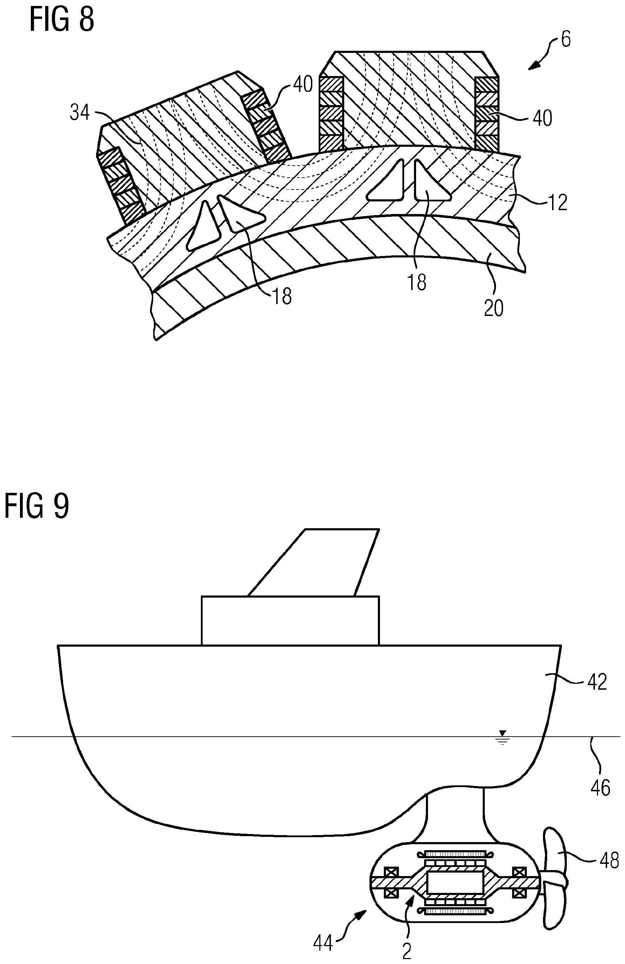

FIG 8 zeigt einen vergrößerten Querschnitt eines Rotors mit Elektromagneten 40, wobei der Rotor 6 als Schenkelpolläufer ausgeführt ist. Die Elektromagnete 40 weisen jeweils eine stromdurchflossene Spule auf, welche ein magnetisches Feld 34 im Blechpaket 12 erzeugt. Die weitere Ausführung des Rotors 6 in FIG 8 entspricht der in FIG 7.

FIG 9 zeigt ein Wasserfahrzeug 42 mit einem Gondelantrieb 44. Das Wasserfahrzeug 42 ist als Schiff oder alternativ als Unterseeboot ausgeführt. Der Gondelantrieb 44 befindet sich unter einer Wasseroberfläche 46 und weist eine elektrische rotierende Maschine 2 und einen Propeller 48 auf, wobei der Propeller 48 mit der Welle 20 der elektrischen rotierenden Maschine 2 verbunden ist.

Zusammenfassend betrifft die Erfindung einen Rotor 6 für eine elektrische rotierende Maschine 2 mit mindestens einem Magneten, welcher ein magnetisches Feld 34 erzeugt, und einem magnetfeldführenden Rotorelement, wobei das magnetfeldführende Rotorelement mindestens einen Kühlkanal 18 aufweist. Um ein Magnetfeld verlustarm zu erzeugen und eine effiziente Kühlung zu gewährleisten, wird vorgeschlagen, dass der mindestens eine Kühlkanal 18 in einem Querschnitt eine Kontur 32 aufweist, welche zumindest abschnittsweise einem Verlauf des magnetischen Feldes 34 folgend ausgeführt ist.

## Patentansprüche

1. Rotor (6) für eine elektrische rotierende Maschine (2) mit mindestens einem Magneten, welcher ein magnetisches Feld (34) erzeugt, und einem magnetfeldführenden Rotorelement,
wobei das magnetfeldführende Rotorelement mindestens einen Kühlkanal (18) aufweist,
**dadurch gekennzeichnet, dass** der mindestens eine Kühlkanal (18) in einem Querschnitt eine Kontur (32) aufweist,
welche zumindest abschnittsweise einem Verlauf des magnetischen Feldes (34) folgend ausgeführt ist.

2. Rotor (6) nach Anspruch 1,
wobei der mindestens eine Magnet als ein Permanentmagnet (16) ausgeführt ist.

3. Rotor (6) nach Anspruch 2,
wobei der mindestens eine Permanentmagnet (16) als vergrabener Permanentmagnet (16) ausgeführt ist.

4. Rotor (6) nach einem der vorherigen Ansprüche,
wobei ein zumindest einem Magneten zugewandter Abschnitt der Kontur (32) des Kühlkanals (18) dem Verlauf des magnetischen Feldes (34) folgend ausgeführt ist.

5. Rotor (6) nach einem der vorherigen Ansprüche,
wobei der mindestens eine Kühlkanal (18) eine dreieckige Kontur (32) aufweist.

6. Rotor (6) nach Anspruch 5,
wobei zumindest eine der Seiten der dreieckigen Kontur (32) dem Verlauf des magnetischen Feldes (34) folgend ausgeführt ist.

7. Rotor (6) nach einem der vorherigen Ansprüche,
wobei der Kühlkanal (18) zumindest abschnittsweise eine Rippenstruktur aufweist.

8. Rotor (6) nach einem der vorherigen Ansprüche,
wobei der mindestens eine Kühlkanal (18) in einem mechanisch zumindest gering belasteten Bereich des magnetfeldführenden Rotorelements angeordnet ist.

9. Rotor (6) nach einem der vorherigen Ansprüche,
wobei das magnetfeldführende Rotorelement als Blechpaket (12) ausgeführt ist,
wobei das Blechpaket (12) eine Vielzahl von in Axialrichtung aufgeschichteten Elektroblechen umfasst.

10. Rotor (6) nach einem der vorherigen Ansprüche,
wobei das Blechpaket (12) mindestens zwei Teilblechpakete (14) mit jeweils mindestens einem Magneten und mindestens einem Kühlkanal (18) umfasst,
wobei die mindestens zwei Teilblechpakete (14) des Blechpakets (12) in Umfangsrichtung auf einer Welle (20) angeordnet sind.

11. Rotor (6) nach Anspruch 10,
wobei die Teilblechpakete (14) im Wesentlichen achsensymmetrisch zu einer in Radialrichtung verlaufenden Symmetrieachse (24) ausgeführt sind.

12. Rotor (6) nach Anspruch 10 oder 11,
wobei zwischen der Welle (20) und mindestens einem Teilblechpaket (14) eine formschlüssige Verbindung ausgebildet ist.

13. Rotor (6) nach einem der Ansprüche 10 bis 12,
wobei zwischen der Welle (20) und mindestens einem Teilblechpaket (14) jeweils mindestens ein elastisches Verbindungselement (28) zur spielfreien Lagerung des Teilblechpakets (14) angeordnet ist.

14. Elektrische rotierende Maschine (2) mit mindestens einem Rotor (6) nach einem der Ansprüche 1 bis 13.

15. Gondelantrieb (44) mit zumindest einer elektrischen rotierenden Maschine (2) nach Anspruch 14.

16. Wasserfahrzeug (42) mit zumindest einem Gondelantrieb (44) nach Anspruch 15.
